# EUROPEAN PATENT APPLICATION

(11) **EP 2 835 338 A1**
(43) Date of publication of application: **11.02.2015**
(21) Application number: 13772673.3
(22) Date of filing: 27.03.2013
(51) Int. Cl.: B67D 1/07, B67D 3/00

(54) **WATER DISPENSER**

(30) Priority: 02.04.2012 JP 2012083790
(71) Applicant: Kabushiki Kaisha Cosmo Life, Kakogawa-shi Hyogo 675-0032 (JP)
(72) Inventor: ORITA Yoshinori, Kakogawa-shi Hyogo 675-0068 (JP)
(74) Representative: Grünecker, Kinkeldey, Stockmair & Schwanhäusser
(86) International application number: PCT/JP2013/058977
(87) International publication number: WO 2013/150936

(57) **Abstract**

A water server is provided which can improve hygienic conditions of drinking water by preventing the flow of drinking water in the direction in which drinking water flows out of the raw water container. 1. The water dispenser includes a cold water tank (2) in which cooled raw water is stored, a hot water tank (11) in which heated drinking water is stored, a container holder (5) located at a lower level than the cold water tank (2) and configured such that a replaceable raw water container (3) can be placed in the container holder (5) with a raw water outlet (4) of the raw water container (3) facing down, a raw water supply line (7) through which drinking water in the raw water container (3) can be fed into the cold water tank (2) by means of a pump (6), and an air intake line (8) through which air can be introduced into the raw water container (3) when the raw water container (3) is placed in the container holder (5), in which a check valve (20) is mounted in the air intake line (8) and configured to prevent the flow of drinking water in the direction in which drinking water flows out of the raw water container (3).

## Description

### TECHNICAL FIELD

This invention relates to a water dispenser capable of feeding drinking water from a replaceable raw water container filled with drinking water.

### BACKGROUND ART

The below-identified Patent document 1 discloses a conventional water dispenser in which a replaceable raw water container is configured to be loaded at the upper portion of the water dispenser, and in which drinking water fed from the raw water container is supplied through a cooling device or a heating device. With the growing interest in safety of water and in health, such water dispensers are used in a growing number of places including hospitals and private homes.

The water dispenser shown in Patent document 1 is configured such that the raw water container is loaded at the upper portion of the water dispenser. In this arrangement, when the raw water container set in the water dispenser becomes empty, it is necessary to lift a new raw water container, which is filled with drinking water and weighs about 8 to 12 kg, to a high place and to replace it with the empty one. This is extremely laborious and troublesome. The inventor of this application therefore manufactured a prototype of a water dispenser in which the raw water container can be set at the lower portion of the water dispenser so that the raw water container can be easily replaced with a new one, and in which drinking water in this raw water container can be fed by a pump.

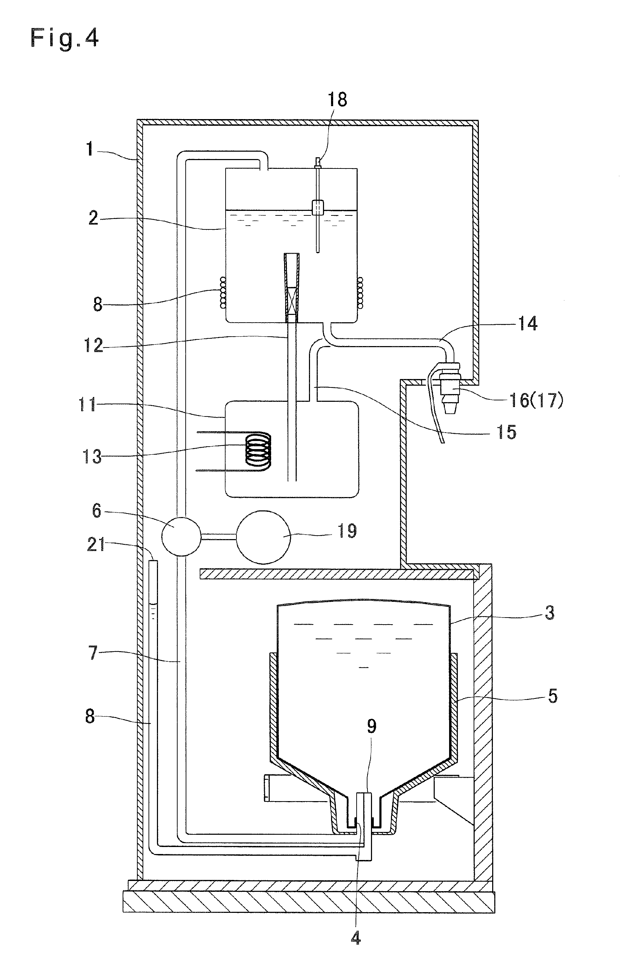

This water dispenser is described with reference to Fig. 4. This water dispenser includes a casing 1, a cold water tank (water storage tank) 2 in which drinking water is stored, and a container holder 5 disposed at a lower level than the cold water tank 2 and configured such that a replaceable raw water container 3 can be placed in the container holder 5 with a raw water outlet 4 of the raw water container 3 facing down. With the raw water container 3 placed in the container holder 5, drinking water in the raw water container 3 can be fed through a raw water supply line 7 into the cold water tank 2 by a pump 6. With the raw water container 3 placed in the container holder 5, air can be introduced into the raw water container 3 through an air intake line 8. The raw water supply line 7 and the air intake line 8 have a raw water suction port and an air discharge port, respectively, which are both connected to the raw water outlet 4 through a joint member 9.

Drinking water in the cold water tank 2 is cooled from its lower portion by a cooling device 10 mounted to the lower portion of the cold water tank 2. The cold water tank 2 has a tank connecting line 12 through which drinking water in the cold water tank 2 is fed into a hot water tank 11 disposed under the cold water tank 2. A heating device 13 is provided in the hot water tank 11, and heats drinking water in the hot water tank 11.

A cold water discharge line 14 and a hot water discharge line 15 are connected to the cold water tank 2 and the hot water tank 3, respectively, such that cold water and hot water can be discharged through a cold water cock 16 provided on the cold water discharge line 14 and a hot water cock 17 provided on the hot water discharge line 15, respectively. A water level sensor 18 is provided in the cold water tank 2 and is configured to detect the level of drinking water stored in the cold water tank 2. When the water level detected by the water level sensor 18 falls below a predetermined value, an electric motor 19 is activated to feed drinking water from the raw water container 3 into the cold water tank 2 by means of a pump 6.

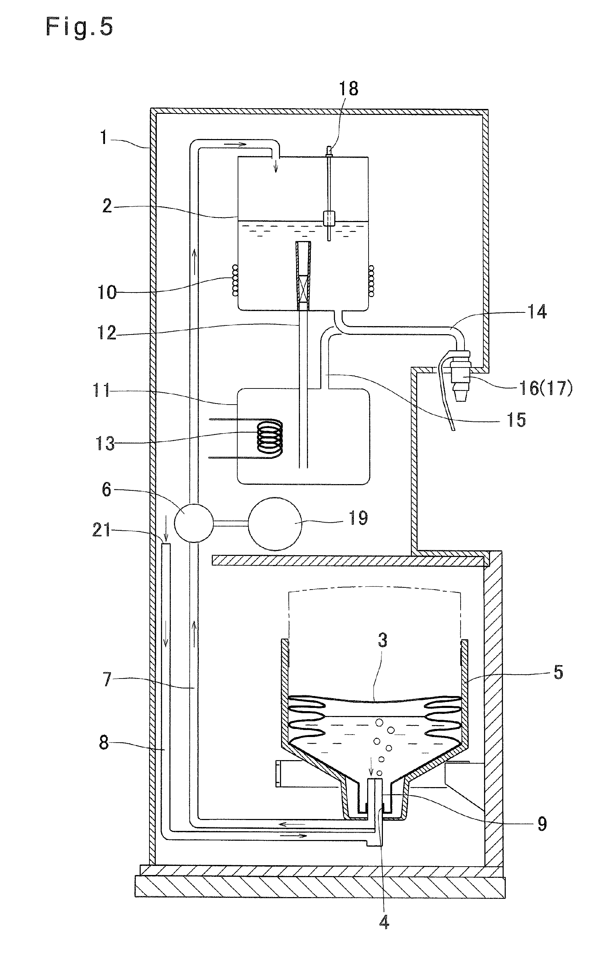

There are two kinds of raw water containers 3: a soft one shown in Fig. 5, of which the volume decreases as drinking water is fed out of the container; and a hard one, of which the volume remains unchanged when drinking water is fed out of the container. If a soft raw water container is used, while a sufficient amount of drinking water still remains in the container, and thus the container is still close in shape to its original shape, the container is smoothly deformed as drinking water is fed out of the container. However, when its volume decreases to a certain degree, the rigidity inherent to the material forming the container will makes it increasingly difficult for the container to be deformed such that its volume decreases. This creates a negative pressure in the container, which in turn makes it difficult to feed drinking water out of the container. In this state, however, since air is introduced into the raw water container 3 through the air intake line 8 due to the pressure difference between the negative pressure in the container and the atmospheric pressure until the negative pressure disappears. Once the negative pressure disappears, drinking water can be smoothly fed out of the container. If a hard container is used, since its volume never decreases from the beginning, air is introduced into the container through the air intake line 8 as soon as drinking water is fed from the container while the container is filled with water, so that drinking water can be smoothly fed out of the container.

### PRIOR ART DOCUMENT(S)

### PATENT DOCUMENT(S)

Patent document 1: JP Patent Publication 2010-264993A

### SUMMARY OF THE INVENTION

### OBJECT OF THE INVENTION

In the water dispenser shown in Fig. 4, when the joint member 9 is inserted through the raw water outlet 4 of the raw water container 3, with the raw water suction port of the raw water supply line 7 and the air discharge port of the air intake line 8 mounted to the joint member 9, drinking water in the raw water container 3 could flow into the air intake line 8 up to a level as high as the water level in the raw water container 3 (the water level in the air intake line 8 shown in Fig. 4). The drinking water that has flown into the air intake line 8 stays in the air intake line 8 until the pump 6 for feeding raw water is activated, and is returned into the raw water container 3 together with air when the pump 6 is activated. The drinking water returned into the raw water container 3 is mixed with clean drinking water originally stored in the raw water container 3. It is not supposed that drinking water flows into the air intake line 8, and it is concerned that bacteria may proliferate in the air intake line 8 or hygienic conditions may otherwise deteriorate if drinking water stays in the air intake line 8 for a long period of time. Therefore, it is not desirable that drinking water in the air intake line 8 be mixed with clean drinking water in the raw water container 3.

An object of the present invention is to prevent the flow of drinking water in the air intake line in the direction in which drinking water flows out of the raw water container, thereby improving the hygienic conditions of drinking water.

### MEANS FOR ACHIEVING THE OBJECT

In order to achieve this object, the present invention provides a water dispenser comprising a water storage tank in which drinking water can be stored, a container holder located at a lower level than the water storage tank and configured such that a replaceable raw water container can be placed in the container holder with a raw water outlet of the raw water container facing down, a raw water supply line through which drinking water in the raw water container can be fed into the water storage tank by means of a pump, an air intake line through which air can be introduced into the raw water container when the raw water container is placed in the container holder, and a check valve mounted in the air intake line and configured to prevent the flow of drinking water in the direction in which drinking water flows out of the raw water container.

This check valve prevents the flow of drinking water in the air intake line in the direction in which drinking water flows out of the raw water container, while allowing introduction of air into the raw water container through the air intake line. As a result, it is possible to smoothly feed drinking water into the water storage tank, while preventing or minimizing the flow of drinking water into the air intake line, thereby ensuring high standards of hygiene of drinking water. The water storage tank may be either a cold water tank or a hot water tank.

Preferably, the air intake line has a portion located at a higher level than a highest possible level of drinking water in the raw water container, and this portion of the air intake line is formed with an air intake port through which air can be taken into the air intake port.

While the check valve is operating normally, the check valve can prevent entry of drinking water into the air intake line. However, this function may be lost or impaired if the check valve malfunctions. In such a case, if the air intake port of the air intake line is located below the level of drinking water in the raw water container, drinking water could leak out through the air intake line. By providing the air intake port at a location higher than the highest possible level of drinking water in the raw water container, it is possible to prevent leakage of drinking water even if the check valve loses its function, which in turn prevents the floor from being soaked with water.

In any of the above-described arrangements, the check valve is preferably provided at the end portion of the air intake line at the raw water container (3).

With this arrangement, it is possible to minimize the amount of drinking water that could flow into the air intake line, thus further improving hygienic conditions of drinking water.

Instead of providing the check valve at the end portion of the air intake line at the raw water container, the check valve may be provided at the end portion of the air intake line opposite from the raw water container, provided the air intake line has an inner diameter of 8 mm or less.

With this arrangement, it is possible to more freely determine the position where the check valve is provided, while preventing drinking water from flowing into the air intake line. In particular, in this arrangement, since the air intake line is closed at one end thereof by the check valve, and the air intake line is of an inner diameter of 8 mm or less, drinking water is prevented from flowing into the air intake line by the surface tension of water and air in the air intake line. The check valve can be provided at any point of the end portion of the air intake line opposite from the raw water container by adjusting the portion of the air intake line located at a higher level than the highest possible water level in the raw water container.

In any of the above arrangements, an ozone generating device is preferably provided at the air intake port of the air intake line.

Since ozone has the sterilizing function, by feeding such ozone into the air phase in the air intake line or the water storage tank, it is possible to further improve hygienic conditions in the air intake line or in the water storage tank.

### ADVANTAGES OF THE INVENTION

According to the present invention, the check valve provided in the air intake line through which air is introduced into the raw water container prevents the flow of drinking water in the direction in which drinking water flows out of the raw water container. The check valve prevents drinking water that has flown into the air intake line from returning into the raw water container when the pump is activated, thus mixing with drinking water in the raw water container. This further improves hygienic conditions of drinking water supplied from the water dispenser. Drinking water supplied from the water dispenser according to the present invention can thus be used for drinking and cooking with a peace of mind.

### BRIEF DESCRIPTION OF THE DRAWINGS

Fig. 1 is a vertical sectional view of a water dispenser according to a first embodiment of the present invention.
Fig. 2 is a vertical sectional view of a water dispenser according to a second embodiment of the present invention.
Fig. 3 is a vertical sectional view of a water dispenser according to a third embodiment of the present invention.
Fig. 4 is a vertical sectional view of a water dispenser according to a comparative example.
Fig. 5 is a vertical sectional view of the water dispenser shown in Fig. 4 in which the volume of a raw water container has decreased from the state of Fig. 4.

### BEST MODE FOR EMBODYING THE INVENTION

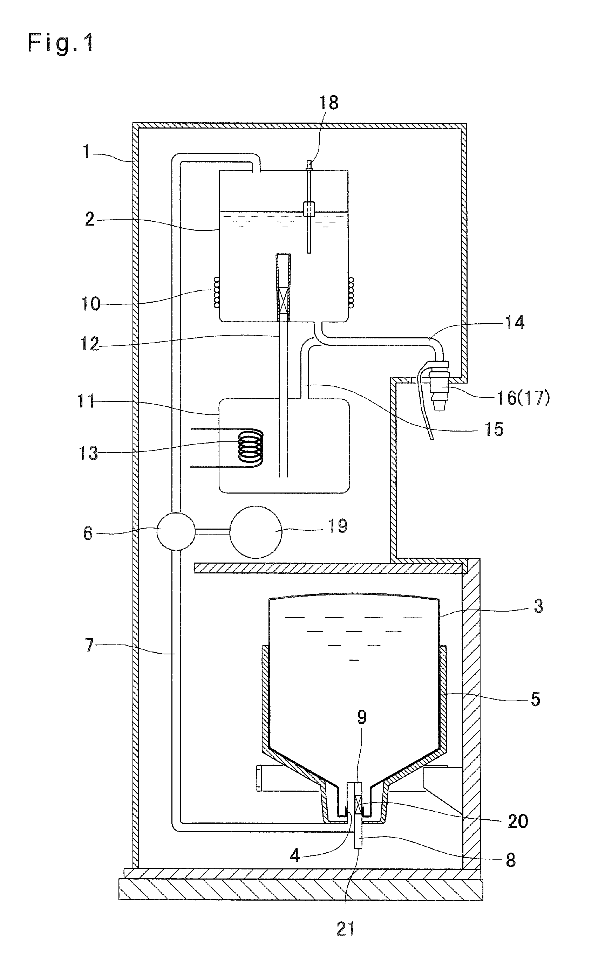

Fig. 1 shows a water dispenser according to a first embodiment of the present invention. This water dispenser includes a casing 1, a cold water tank 2 (water storage tank) in which cooled drinking water is stored, a hot water tank 11 in which heated drinking water is stored, and a container holder 5 disposed at a lower level than the cold water tank 2 and configured such that a replaceable raw water container 3 can be placed in the container holder 5 with a raw water outlet 4 of the raw water container 3 facing down. With the raw water container 3 placed in the container holder 5, drinking water in the raw water container 3 can be fed through a raw water supply line 7 into the cold water tank 2 by a pump 6. With the raw water container 3 placed in the container holder 5, air can be introduced into the raw water container 3 through an air intake line 8. A check valve 20 is mounted in the air intake line 8 and is configured to prevent the flow of drinking water in the direction in which drinking water flows out of the raw water container 3. The air intake line 8 has a downwardly facing air intake port 21.

The raw water container 3 is a thin-walled member formed of polyethylene terephthalate (PET) resin or polyethylene (PE), and is relatively flexible. The raw water container 3 has a raw water outlet 4 at its lower portion. The raw water supply line 7 and the air intake line 8 have a raw water suction port and an air discharge port, respectively, which are both connected to the raw water outlet 4 through a joint member 9. The joint member 9 is a hollow tubular member through which air and drinking water can freely pass.

Drinking water stored in the cold water tank 2 is cooled from its lower portion by a cooling device 10 mounted to the lower portion of the cold water tank 2. The cold water tank 2 has a tank connecting line 12 through which drinking water in the cold water tank 2 is fed into the hot water tank 11, which is disposed under the cold water tank 2. A heating device 13 is provided in the hot water tank 11, and heats drinking water in the hot water tank 11.

A cold water discharge line 14 and a hot water discharge line 15 are connected to the cold water tank 2 and the hot water tank 3, respectively, such that cooled water (cold water) and heated water (hot water) can be discharged through a cold water cock 16 provided on the cold water discharge line 14 and a hot water cock 17 provided on the hot water discharge line 15, respectively. A water level sensor 18 is provided in the cold water tank 2 and is configured to detect the level of drinking water stored in the cold water tank 2. When the water level detected by the water level sensor 18 falls below a predetermined value, an electric motor 19 is activated to feed drinking water from the raw water container 3 into the cold water tank 2 by means of a pump 6. The pump 6 is a gear pump including a pair of gears meshing with each other and configured to feed water by rotating.

When the joint member 9 is inserted through the raw water outlet 4 of the raw water container 3, with the raw water suction port of the raw water supply line 7 and the air discharge port of the air intake line 8 mounted to the joint member 9, drinking water in the raw water container 3 tends to flow out of the container 3 through the air intake line 8 under the atmospheric pressure. Actually, however, the check valve 20 provided in the air intake line 8 prevents drinking water in the raw water container 3 from flowing out of the container 3 through the air intake line 8. The check valve 20 is preferably provided as close as possible to the end of the air intake line 8 at the raw water container 3 (namely to the air discharge port). With this arrangement, it is possible to minimize the amount of drinking water flowing into the air intake line 8, thereby further improving the hygiene of drinking water.

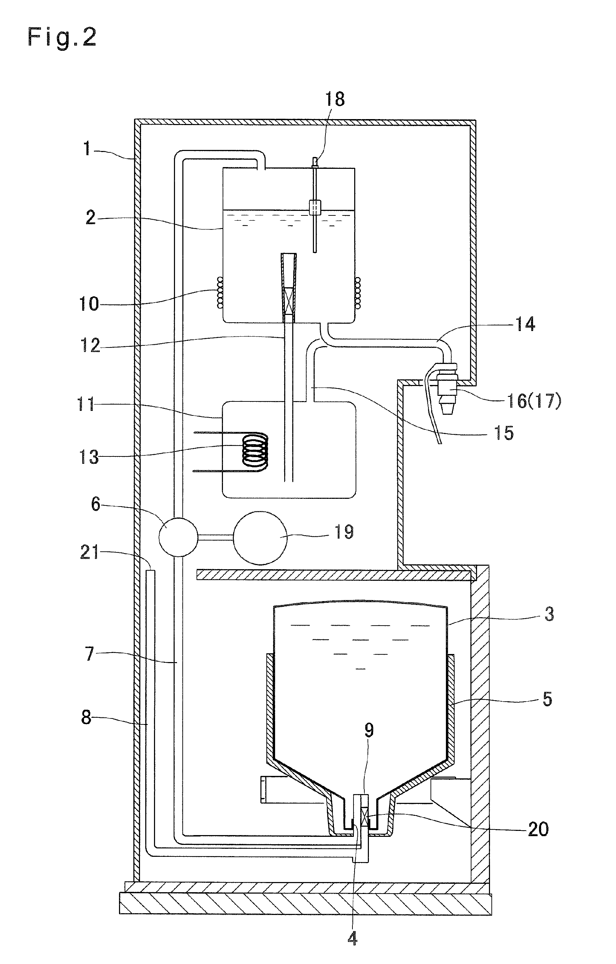

Fig. 2 shows a water dispenser according to a second embodiment of the present invention. The water dispenser of this embodiment is substantially identical in structure to the water dispenser of the first embodiment, except that the air intake line 8 has a portion located at a higher level than the highest possible level of drinking water in the raw water container 3. The air intake port 21, through which air can be taken into the air intake line 8, is formed in this portion.

By providing the air intake port 21 in the portion of the air intake line 8 located at a higher level than the highest possible water level in the raw water container 3, even if the check valve 20 loses its water flow checking function, drinking water will never leak out through the air intake port 21. This positively prevents the floor on which the water dispenser is installed from being soaked with water.

In the second embodiment, the check valve 20 is provided in the vicinity of the end of the air intake line 8 at the raw water container 3. However, if the check valve 20 is of an inner diameter of 8 mm or less, the check valve 20 may be provided at the end portion of the air intake line 8 opposite from (remote from) the raw water container 3 (in the vicinity of the air intake port 20). With this arrangement, it is possible to more freely determine the position where the check valve 20 is provided, while preventing drinking water from flowing into the air intake line 8. In particular, in this arrangement, since the air intake line 8 is closed at one end thereof by the check valve 20, and the air intake line 8 is of an inner diameter of 8 mm or less, drinking water is prevented from flowing into the air intake line 8 by the surface tension of water and air in the air intake line 8. The check valve 20 can be provided at any point of the end portion of the air intake line 8 opposite from the raw water container 3 by adjusting the portion of the air intake line 8 located at a higher level than the highest possible water level in the raw water container 3.

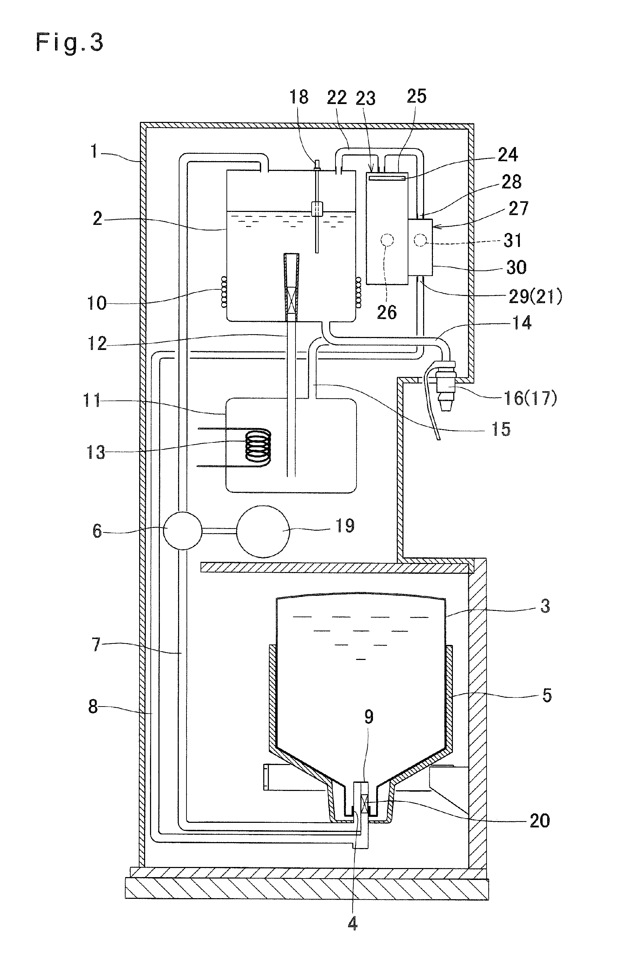

Fig. 3 shows a water dispenser according to a third embodiment of the present invention. The water dispenser of this embodiment includes an ozone generating device configured to convert oxygen in the air into ozone. Ozone generated is used to sterilize the interiors of the air intake line 8 and the cold water tank 2, thereby further improving the hygienic conditions. In particular, an air sterilizing chamber 23 is connected to the cold water tank 2 through an air introducing line 22. The air sterilizing chamber 23 includes a hollow case 25 formed with an air inlet port 24, and an ozone generator 26 mounted in the case 25. The ozone generator 26 may be a low-pressure mercury lamp, which is configured to irradiate oxygen in the air with ultraviolet radiation to covert the oxygen into ozone, or may be a silent discharge apparatus, which is configured to apply an AC voltage across a pair of electrodes covered with insulating material, thereby converting oxygen between the electrodes into ozone.

As the water level in the cold water tank 2 falls, air is introduced into the cold water tank 2 through the air introducing line 22, thereby keeping the interior of the cold water tank 2 at the atmospheric pressure. Since air introduced into the cold water tank 2 through the air introducing line 22 has been sterilized by ozone in the air sterilizing chamber 23, air in the cold water tank 2 is kept clean.

The air introducing line 22 has a branch connected to an ozone generating device 27. The ozone generating device 27 includes a hollow case 30 formed with an inlet 28 and an outlet 29, and an ozone generator 31 mounted in the case 30. The inlet 28 of the case 30 is connected to the air introducing line 22, while the outlet 29 of the case 30 is connected to the air intake port 21 of the air intake line 8, through which air can be taken into the air intake line 8. The air intake port 21 is the opening of the air intake line at its end opposite from the raw water container 3. As with the ozone generator 26 of the air sterilizing chamber 23, the ozone generator 31 may be a low-pressure mercury lamp or a silent discharge apparatus.

### DESCRIPTION OF THE NUMERALS

1. Casing
2. Water storage tank (cold water tank)
3. Raw water container
4. Raw water outlet
5. Container holder
6. Pump
7. Raw water supply line
8. Air intake line
9. Joint member
10. Cooling device
11. Hot water tank
12. Tank connecting line
13. Heating device
14. Cold water discharge line
15. Hot water discharge line
16. Cold water cock
17. Hot water cock
18. Water level sensor
19. Electric motor
20. Check valve
21. Air intake port
22. Air introducing line
23. Air sterilizing chamber
24. Air inlet port
25. Case
26. Ozone generator
27. Ozone generating device
28. Inlet
29. Outlet
30. Case
31. Ozone generator

## Claims

1. A water dispenser comprising a water storage tank (2) in which drinking water can be stored, a container holder (5) located at a lower level than the water storage tank (2) and configured such that a replaceable raw water container (3) can be placed in the container holder (5) with a raw water outlet (4) of the raw water container (3) facing down, a raw water supply line (7) through which drinking water in the raw water container (3) can be fed into the water storage tank (2) by means of a pump (6), and an air intake line (8) through which air can be introduced into the raw water container (3) when the raw water container (3) is placed in the container holder (5), **characterized in that** a check valve (20) is mounted in the air intake line (8) and configured to prevent a flow of drinking water in a direction in which drinking water flows out of the raw water container (3).

2. The water dispenser of claim 1, wherein the air intake line (8) has a portion located at a higher level than a highest possible level of drinking water in the raw water container (3), and wherein said portion of the air intake line (8) is formed with an air intake port (21) through which air can be taken into the air intake port (21).

3. The water dispenser of claim 1 or 2, wherein the check valve (20) is provided at an end portion of the air intake line (8) at the raw water container (3).

4. The water dispenser of claim 1 or 2, wherein the air intake line (8) has an inner diameter of 8 mm or less, and wherein the check valve (20) is provided at an end portion of the air intake line (8) opposite from the raw water container (3).

5. The water dispenser of any of claims 1 to 4, wherein an ozone generating device (27) is provided at the air intake port (21) of the air intake line (8).
